# EUROPEAN PATENT APPLICATION

(11) **EP 3 384 765 A1**
(43) Date of publication of application: **10.10.2018**
(21) Application number: 15909765.8
(22) Date of filing: 02.12.2015
(51) Int. Cl.: A01K 23/00, A01K 1/015

(54) **TOILET**

(71) Applicant: Daiki Co., Ltd., Minato-ku Tokyo 107-0052 (JP)
(72) Inventor: ITO, Hiroshi, Tokyo 150-0042 (JP)
(74) Representative: Müller-Boré & Partner Patentanwälte PartG mbB
(86) International application number: PCT/JP2015/083852
(87) International publication number: WO 2017/094135

(57) **Abstract**

Provided is a toilet that does not require a partition member despite containing both granules and an absorbent sheet. A toilet (1) includes a receptacle (10), an absorbent sheet (20), and a plurality of granules (30). The receptacle (10) has a bottom surface part (10a) and side surface parts (10b). The absorbent sheet (20) is arranged within the receptacle (10). The granules (30) are arranged directly upon the absorbent sheet (20). Each granule (30) is made of a chemically-integrated resin.

## Description

### Technical Field

The present invention relates to a toilet for animal or human use.

### Background Art

The toilet disclosed in Patent Document 1 can be given as an example of a conventional toilet. The toilet disclosed in this document is a toilet for animal use, and is partitioned into top and bottom parts by a partition member (a drainboard). Holes that allow animal urine to pass are formed in the partition member. Many low-absorbency granules are provided in the space above the partition member. An absorbent sheet is provided in the space below the partition member. According to the toilet configured in this manner, animal urine passes among the granules and through the partition member, and is then absorbed by the absorbent sheet.

### Citation List

### Patent Document

Patent Document 1: JP 2003-180182A

### Summary of Invention

### Technical Problem

The above-described granules are obtained by compacting crushed material such as wood to form material into granular shape. Thus when exposed to urine, the granules may partially or completely disintegrate. If the disintegrated granules adhere to the absorbent sheet, the absorbent sheet will be soiled and the absorbency thereof will decrease.

Thus in a conventional toilet provided with granules and an absorbent sheet, it is necessary to provide the partition member to keep the granules and the absorbent sheet separated. However, providing such a partition member complicates the structure of the toilet.

Having been achieved in light of the above-described problem, an object of the present invention is to provide a toilet that does not require a partition member despite both granules and an absorbent sheet being provided.

### Solution to Problem

A toilet according to the present invention includes a receptacle having a bottom surface part and a side surface part, an absorbent sheet provided within the receptacle; and a plurality of granules arranged directly upon the absorbent sheet, wherein each of the granules is made of a chemically-integrated resin.

In this toilet, the granules are made of a chemically-integrated resin, and thus do not disintegrate even when exposed to urine. Thus a drop in the absorbency of the absorbent sheet can be prevented even if the granules and the absorbent sheet are not separated. In actuality, the granules are arranged directly upon the absorbent sheet. As such, in this toilet, it is not necessary to provide a partition member.

### Advantageous Effects of Invention

According to the present invention, a toilet, which does not require a partition member despite both granules and an absorbent sheet being provided, can be realized.

### Brief Description of Drawings

FIG. 1 is an end view illustrating a first embodiment of a toilet according to the present invention.
FIG. 2 is an end view illustrating a main body part of the toilet of FIG. 1.
FIG. 3 is a front view of the main body part of the toilet of FIG. 1.
FIG. 4 is a perspective view of a drawer part of the toilet of FIG. 1.
FIG. 5 is an end view illustrating the structure of an opening/closing part of the toilet of FIG. 1.
FIG. 6 is an end view illustrating a state of the toilet of FIG. 1 when in use.
FIG. 7 is an end view illustrating an effect of the toilet of FIG. 1.
FIG. 8 is an end view illustrating a second embodiment of a toilet according to the present invention.
FIG. 9 is a rear view of a main body part of the toilet of FIG. 8.
FIG. 10 is a plan view of a plate-shaped member of the toilet of FIG. 8.
FIG. 11 is an end view illustrating a state of the toilet of FIG. 8 when in use.
FIG. 12 is a diagram illustrating a variation on a granule.
FIG. 13 is an end view taken along a line XIII-XIII in FIG. 12.
FIG. 14 is a diagram illustrating another variation on a granule.
FIG. 15 is a diagram illustrating another variation on a granule.

### Description of Embodiments

Embodiments of the present invention will be described in detail hereinafter with reference to the drawings. In the drawings, identical elements are given identical reference signs, and descriptions thereof will not be repeated.

### (First Embodiment)

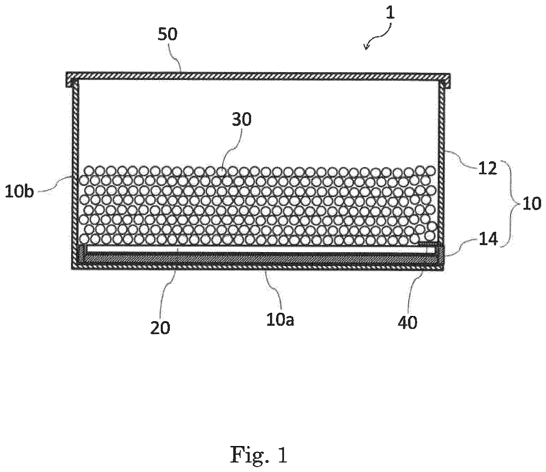

FIG. 1 is an end view illustrating a first embodiment of a toilet according to the present invention. A toilet 1 is a toilet for animal or human use, and includes a receptacle 10, an absorbent sheet 20, and a plurality of granules 30. The receptacle 10 has a bottom surface part 10a and side surface parts 10b. In the present embodiment, the receptacle 10 is substantially a parallelepiped. The receptacle 10 has a main body part 12 and a drawer part 14.

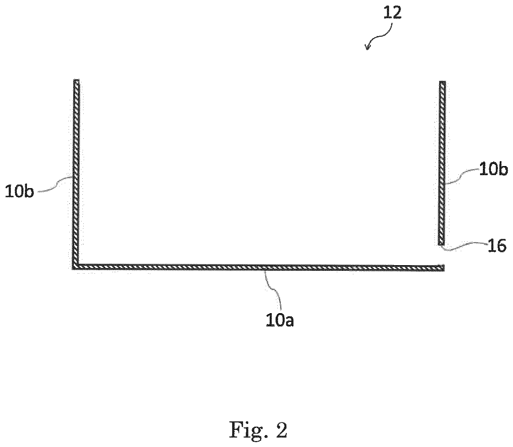

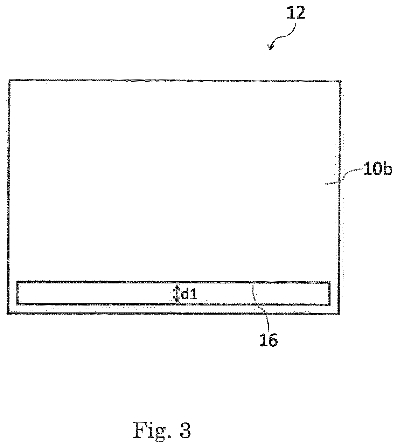

FIGS. 2 and 3 are an end view and a front view, respectively, of the main body part 12. The main body part 12 is a box-shaped part having the bottom surface part 10a and the side surface parts 10b. An opening 16 (a first opening) is formed in a side surface part 10b of the main body part 12. The opening 16 is located near the bottom surface part 10a, and is rectangular in shape. The length of the opening 16 in a left-right direction is substantially equal to the interior horizontal width of the main body part 12. Preferably, the length d1 of the opening 16 in an up-down direction (see FIG. 3) is less than or equal to 15 mm. A resin such as polypropylene or polyethylene can be used as the material of the main body part 12.

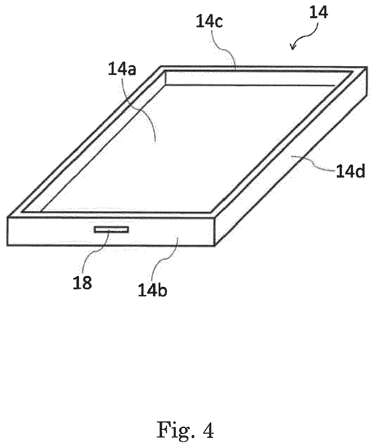

FIG. 4 is a perspective view of the drawer part 14. The drawer part 14 can be pulled out from and inserted into the main body part 12 through the opening 16. The drawer part 14 has a base board 14a, a front board 14b, a rear board 14c, and a pair of side boards 14d. The size of the base board 14a is substantially equal to the size of the bottom surface part 10a of the main body part 12. The front board 14b is substantially the same shape and size as the opening 16. A grip 18 is attached to the front board 14b. A resin such as polypropylene or polyethylene can be used as the material of the drawer part 14.

Returning to FIG. 1, the absorbent sheet 20 is arranged within the receptacle 10. The absorbent sheet 20 is a sheet for absorbing urine. The absorbent sheet 20 is arranged within the receptacle 10 so as to be contained within the drawer part 14. At this time, the absorbent sheet 20 may be fixed to the base board 14a using double-sided tape or the like. Preferably, the height of the upper end of the front board 14b of the drawer part 14 is substantially equal to the height of the upper face of the absorbent sheet 20 contained within the drawer part 14, as illustrated in FIG. 1.

The plurality of granules 30 are laid upon the absorbent sheet 20. The granules 30 are arranged directly upon the absorbent sheet 20. In the present embodiment, the granules 30 are spherical. The granules 30 are, for example, greater than or equal to 5 mm and less than or equal to 30 mm in diameter. The granules 30 may be hollow.

Each granule 30 is made of a chemically-integrated resin. In other words, the entirety of the resin constituting each the granule 30 is chemically integrated. A single mass formed by intertwining a plurality of resin pieces, a single mass formed by bonding a plurality of resin pieces together using a binder or the like, and so on do not constitute a "chemically-integrated resin". The granules 30 can be obtained by molding melted resin using a mold, as with injection molding or blow molding, for example. A resin such as polypropylene or polyethylene can be used as the material of the granules 30.

Preferably, the granules 30 have antibacterial properties. Preferably, the granules 30 also have anti-odor or deodorizing properties. For example, granules 30 having antibacterial, anti-odor, or deodorizing properties can be realized by coating the surfaces of the granules 30 with an antibacterial agent, an anti-odor agent, or a deodorizing agent.

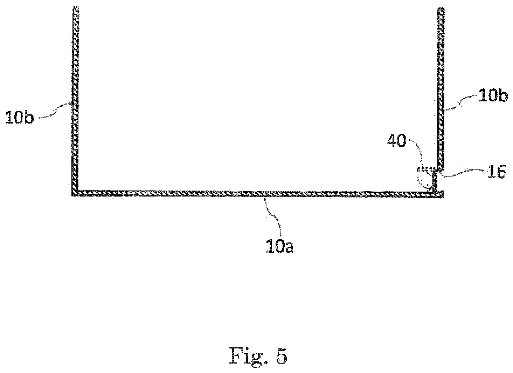

The toilet 1 further includes an opening/closing part 40 and a cover part 50. The opening/closing part 40 opens the opening 16 while the drawer part 14 is inserted into the main body part 12 (see FIG. 1). On the other hand, the opening/closing part 40 blocks the opening 16 after the drawer part 14 has been pulled out from the main body part 12, as illustrated in FIG. 5. In other words, the opening/closing part 40 is in a substantially vertical state when the drawer part 14 is not inserted into the main body part 12, but is pushed upward by the drawer part 14 into a substantially horizontal state when the drawer part 14 is inserted into the main body part 12. In the present embodiment, the opening/closing part 40 is constituted by a plate-shaped member (a first plate-shaped member) capable of pivoting with the upper side of the opening 16 serving as an axis. The opening/closing part 40 is attached to the upper side of the opening 16 by a hinge, for example. A resin such as polypropylene or polyethylene can be used as the material of the opening/closing part 40.

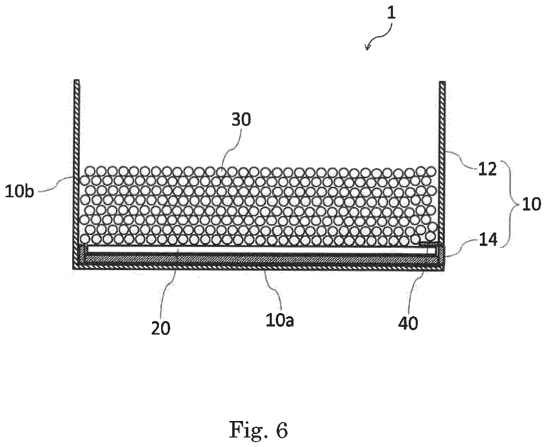

The cover part 50 is a part that covers the receptacle 10 from above. The cover part 50 is provided so as to be openable and closable. The toilet 1 is used with the cover part 50 open, as illustrated in FIG. 6. The interior of the receptacle 10 is sealed when the cover part 50 is closed. A resin such as polypropylene or polyethylene can be used as the material of the cover part 50.

Effects of the toilet 1 will be described. When the toilet 1 is used, urine expelled onto the granules 30 flows downward while passing through the gaps between adjacent granules 30, and reaches the absorbent sheet 20. The urine that has reached the absorbent sheet 20 is absorbed by the absorbent sheet 20. Here, the granules 30 are made of a chemically-integrated resin, and thus do not disintegrate even when exposed to urine. Thus a drop in the absorbency of the absorbent sheet 20 can be prevented even if the granules 30 and the absorbent sheet 20 are not separated. In actuality, the granules 30 are arranged directly upon the absorbent sheet 20. Thus with the toilet 1, it is not necessary to provide a partition member for separating the granules 30 and the absorbent sheet 20 during use. As such, the toilet 1, which does not require a partition member despite both the granules 30 and the absorbent sheet 20 being provided, can be realized.

Additionally, because the granules 30 are made of a chemically-integrated resin, the granules 30 absorb no urine. In other words, the granules 30 are completely nonabsorbent. With granules obtained by compacting crushed materials, as with the granules described in Patent Document 1, it is difficult to achieve complete nonabsorbency. This is because with such granules, gaps are present between the crushed materials even if a nonabsorbent material is used, and thus urine can penetrate through those gaps. The granules absorbing even a slight amount of urine causes not only the disintegration of the granules, but also produces odor. With respect to this point, according to the present embodiment, the granules 30 are completely nonabsorbent, and thus such odor can be prevented as well.

In the toilet 1, the drawer part 14 is provided capable of being pulled out from and pushed into the main body part 12 through the opening 16. This makes it easy to replace a used absorbent sheet 20 with a new one.

The front board 14b of the drawer part 14 is substantially the same shape and size as the opening 16. Accordingly, the entire opening 16 is blocked off by the front board 14b, which makes it possible to prevent urine from leaking out of the receptacle 10 through the opening 16.

If the height of the upper end of the front board 14b of the drawer part 14 is substantially equal to the height of the upper surface of the absorbent sheet 20 contained in the drawer part 14, there is no gap between the upper surface of the absorbent sheet 20 and the opening 16 when the drawer part 14 is pulled out from the main body part 12. This makes it possible to prevent the granules 30 from escaping from the receptacle 10 through the opening 16, becoming trapped between the upper surface of the absorbent sheet 20 and the opening 16, and so on.

Reducing the length d1 of the opening 16 (see FIG. 3) makes it difficult for the granules 30 to escape from the receptacle 10. From this standpoint, the length d1 is preferably less than or equal to 15 mm.

The granules 30 are spherical in shape. In this case, the plurality of granules 30 can be laid upon the absorbent sheet 20 at a high density. Accordingly, even if an odor emanates from the absorbent sheet 20 that has absorbed urine, that odor can be blocked by the granules 30 and kept from rising above the receptacle 10.

The toilet 1 is provided with the opening/closing part 40. Accordingly, the opening 16 is blocked off after the drawer part 14 is pulled out from the main body part 12, which prevents the granules 30 from escaping from the receptacle 10.

The opening/closing part 40 is constituted by a plate-shaped member capable of pivoting with the upper side of the opening 16 serving as an axis. Accordingly, the opening/closing part 40, which opens the opening 16 when the drawer part 14 is inserted into the main body part 12 and blocks off the opening 16 after the drawer part 14 has been pulled out from the main body part 12, can be realized with a simple structure.

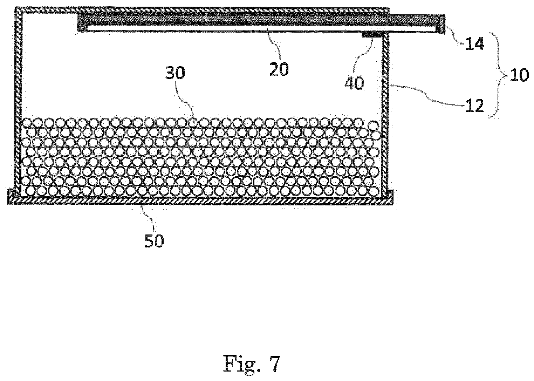

The cover part 50, which covers the receptacle 10 from above, is provided. By closing the cover part 50 when the toilet 1 is not in use, odor arising within the receptacle 10 can be prevented from escaping to the exterior of the receptacle 10. Additionally, when the absorbent sheet 20 is to be replaced, inverting the receptacle 10 after closing the cover part 50, as illustrated in FIG. 7, causes the granules 30 to separate from the absorbent sheet 20, which makes it possible to pull out and insert the drawer part 14 smoothly.

### (Second Embodiment)

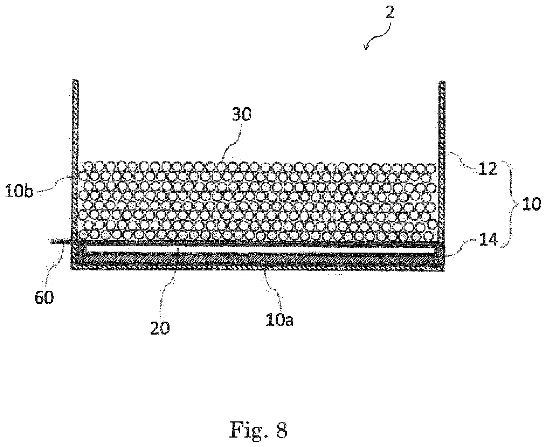

FIG. 8 is an end view illustrating a second embodiment of a toilet according to the present invention. A toilet 2 is a toilet for animal or human use, and includes a plate-shaped member 60 (a second plate-shaped member) in addition to the receptacle 10, the absorbent sheet 20, and the plurality of granules 30. The configurations of the absorbent sheet 20 and the granules 30 are as described in the first embodiment.

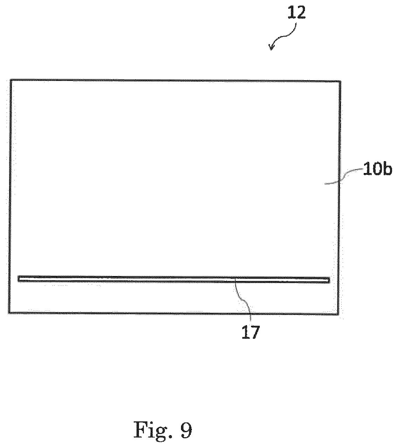

FIG. 9 is a rear view of the main body part 12 according to the present embodiment. An opening 17 (a second opening) is formed in a side surface part 10b of the main body part 12. The opening 17 is provided on the side opposite from the opening 16. The length of the opening 17 in the left-right direction is substantially equal to the interior horizontal width of the main body part 12. The height of the lower side of the opening 17 is substantially equal to the height of the upper side of the opening 16. An opening/closing part (not illustrated) having the same functionality as the opening/closing part 40 is provided in the opening 17 as well. The other configurations of the main body part 12 are as described in the first embodiment.

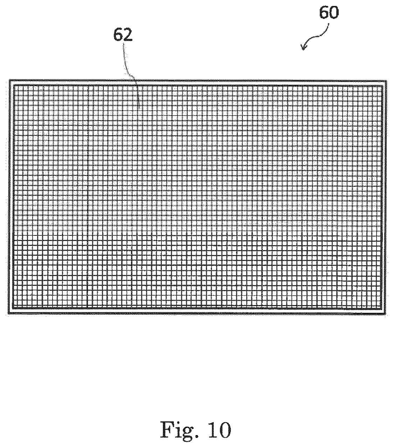

FIG. 10 is a plan view of the plate-shaped member 60. A plurality of holes 62 are formed in the plate-shaped member 60. In the present embodiment, the plate-shaped member 60 is a wire mesh, and the openings in the mesh constitute the holes 62. The holes 62 have a size that prevents the granules 30 from passing therethrough. The plate-shaped member 60 has a size that covers substantially the entire bottom surface part 10a of the main body part 12 when interposed between the absorbent sheet 20 and the granules 30 as described later. Preferably, the thickness of the plate-shaped member 60 is less than or equal to 5 mm.

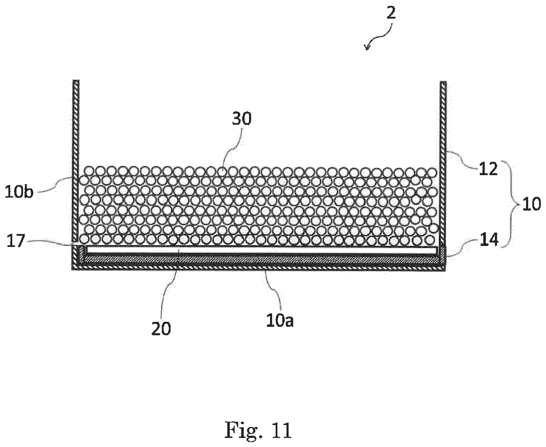

The plate-shaped member 60 can be pulled out from and inserted into the main body part 12 through the opening 17. The toilet 2 is used with the plate-shaped member 60 pulled out from the main body part 12, as illustrated in FIG. 11. The plate-shaped member 60 is inserted into the main body part 12 as necessary when the toilet 2 is not in use. At this time, the plate-shaped member 60 is inserted between the absorbent sheet 20 and the plurality of granules 30 with the absorbent sheet 20 and the plurality of granules 30 remaining within the receptacle 10. As a result, the plate-shaped member 60 is interposed between the absorbent sheet 20 and the granules 30 (see FIG. 8).

Effects of the toilet 2 will be described. The toilet 2 is provided with the plate-shaped member 60. Inserting the plate-shaped member 60 into the main body part 12 before replacing the absorbent sheet 20 separates the granules 30 from the absorbent sheet 20, which makes it possible to pull out and insert the drawer part 14 smoothly.

The opening 17 is formed in a side surface part 10b of the main body part 12. Accordingly, even if the absorbent sheet 20 and the granules 30 remain within the receptacle 10, the plate-shaped member 60 can easily be inserted between the absorbent sheet 20 and the granules 30.

The holes 62 are formed in the plate-shaped member 60. Accordingly, after the drawer part 14 has been removed from the main body part 12, the granules 30 can be rinsed with water from above with the granules 30 remaining on the plate-shaped member 60. As a result, the granules 30 can be cleaned with ease while remaining contained within the receptacle 10.

Reducing the thickness of the plate-shaped member 60 makes it easy to insert the plate-shaped member 60 between the absorbent sheet 20 and the granules 30. From this standpoint, preferably, the thickness of the plate-shaped member 60 is less than or equal to 5 mm.

The plate-shaped member 60 is a wire mesh. A wire mesh is both thin and sufficiently rigid, and is therefore suitable for use as the plate-shaped member 60 that can easily be inserted between the absorbent sheet 20 and the granules 30. The other effects of the toilet 2 are same as those of the toilet 1.

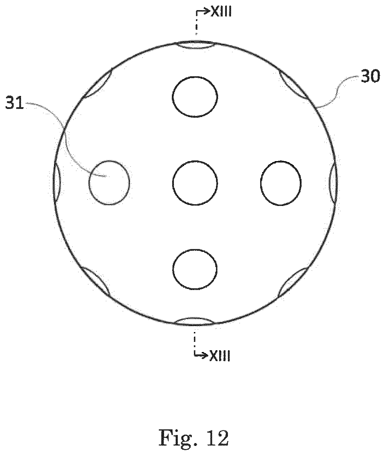

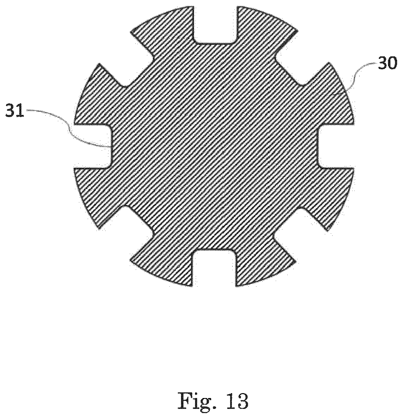

The present invention is not limited to the foregoing embodiments, and many variations can be made thereon. For example, a recess 31 may be formed in the surface of the granule 30, as illustrated in FIGS. 12 and 13. FIG. 12 is a front view of the granule 30. FIG. 13 is an end view taken along a line XIII-XIII in FIG. 12. The granule 30 is a sphere having the recess 31 in its surface. In this example, a plurality of the recesses 31 are formed in the surface of the granule 30. The plurality of the recesses 31 are arranged regularly in the surface of the granule 30. The recesses 31 are provided at points across substantially the entire surface of the granule 30.

A functional substance (not illustrated) is held within the recesses 31. The functional substance is a substance having a prescribed effect on air or urine within the receptacle 10. An antibacterial agent, an anti-odor agent, a deodorizing agent, a perfuming agent, and so on can be given as examples of the functional substance. The functional substance may be in liquid form or in solid form. The functional substance can be supplied into the recesses 31 by being injected into the recesses 31, for example.

By holding various types of functional substances in the recesses 31, the granules 30 having a desired function can be obtained with ease. If the functional substance is an antibacterial agent, the propagation of various bacteria can be suppressed, even if urine adheres to the granules 30. If the functional substance is an anti-odor agent or a deodorizing agent, odors produced by urine can be eliminated. In addition, if the functional substance is a perfuming agent, odor produced by urine can be masked.

The recess 31 having a greater depth makes it possible for the recess 31 to hold a large amount of the functional substance. However, too great a depth reduces the mechanical strength of the granule 30. From this standpoint, preferably, the depth of the recess 31 is greater than or equal to 1 mm and less than or equal to 10 mm. Additionally, reducing the diameter of the entrance of the recess 31, i.e., the diameter of the recess 31 in the surface of the granule 30, makes it difficult for the functional substance to leak out of the recess 31. This is because if the diameter of the recess 31 is small, a functional substance in liquid form tends to remain in the recess 31 due to surface tension. On the other hand, if the diameter is too small, it becomes difficult to insert the functional substance into the recess 31. From this standpoint, preferably, the diameter of the entrance of the granule 30 is greater than or equal to 1 mm and less than or equal to 3 mm.

A plurality of the recesses 31 are formed in the surface of the granule 30. Accordingly, a large amount of the functional substance with respect to the overall granule 30 can be held in the granule 30, even if the individual recesses 31 are made small. Additionally, the plurality of the recesses 31 are arranged regularly in the surface of the granule 30. In this case, compared to a case where the arrangement of the recesses 31 is irregular, the granule 30 can be formed with ease and the aesthetic appearance of the granule 30 can be enhanced. Furthermore, the recesses 31 are provided at points across substantially the entire surface of the granule 30. Accordingly, the effects of the functional substance can be fully realized regardless of from which direction the granule 30 is exposed to urine.

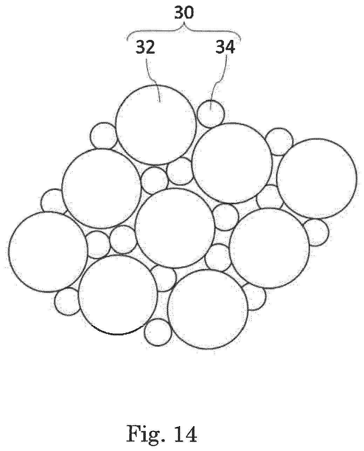

In the foregoing embodiments, the plurality of granules 30 may include a granule 32 (first granule) and a granule 34 (second granule) having different sizes, as illustrated in FIG. 14. The granule 32 has a first diameter, and the granule 34 has a second diameter smaller than the first diameter. Preferably, the first diameter is less than or equal to 30 mm. Preferably, the second diameter is greater than or equal to 5 mm.

In this case, the granules 34 enter into the gaps between the granules 32, which makes it possible to lay out the granules 30 at a higher density than when the granules 30 include only the granules 32. Laying out the granules 30 at a high density in this manner makes it possible to keep an animal from sinking in when the animal steps onto the granules 30. This stabilizes the animal's footing, which reduces the burden on the animal's legs when the animal excretes.

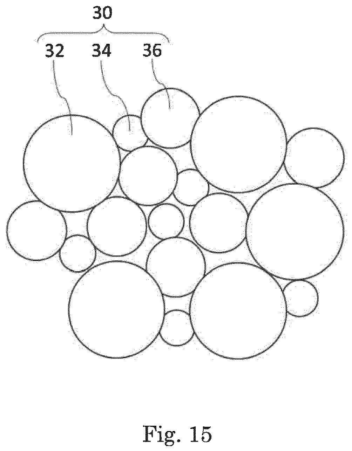

Furthermore, the plurality of granules 30 may include a granule 36 (third granule) in addition to the granule 32 and the granule 34, as illustrated in FIG. 15. The granule 36 has a third diameter. The third diameter is smaller than the first diameter and greater than the second diameter. In this case, the granules 36 enter into the gaps between the granules 32 and the gaps between the granules 32 and the granules 34. This makes it possible to increase the density of the granules 30 even further.

In the foregoing embodiments, a material aside from resin may be added to the granule 30 as long as the chemical integrity of the resin is not lost. In this case, however, the weight percentage of the material aside from the resin in the granule 30 is preferably less than or equal to 10% (that is, the weight percentage of chemically-integrated resin is greater than or equal to 90%).

The foregoing embodiments describe a case where the granules 30 are spherical. However, the shape of the granule 30 may be a shape aside from a sphere (e.g., a cylinder, an ellipsoid, a cube, a regular tetrahedron, or the like) as long as the granule 30 is granular.

### List of Reference Numerals

- 1: Toilet
- 2: Toilet
- 10: Receptacle
- 10a: Bottom surface part
- 10b: Side surface part
- 12: Main body part
- 14: Drawer part
- 14a: Base board
- 14b: Front board
- 14c: Rear board
- 14d: Side board
- 16: Opening (first opening)
- 17: Opening (second opening)
- 18: Grip
- 20: Absorbent sheet
- 30: Granule
- 31: Recess
- 32: Granule (first granule)
- 34: Granule (second granule)
- 36: Granule (third granule)
- 40: Opening/closing part
- 50: Cover part
- 60: Plate-shaped member (second plate-shaped member)
- 62: Hole

## Claims

1. A toilet comprising:
a receptacle having a bottom surface part and a side surface part;
an absorbent sheet provided within the receptacle; and
a plurality of granules arranged directly upon the absorbent sheet,
wherein each of the granules is made of a chemically-integrated resin.

2. The toilet according to claim 1,
wherein the receptacle has a main body part having the bottom surface part and the side surface part, and a drawer part containing the absorbent sheet;
a first opening is formed in the side surface part of the main body part; and
the drawer part is pulled out from and inserted into the main body part through the first opening.

3. The toilet according to claim 2,
wherein a front board of the drawer part is substantially the same shape and size as the first opening.

4. The toilet according to claim 3,
wherein a height of an upper end of the front board of the drawer part is substantially equal to a height of an upper surface of the absorbent sheet contained in the drawer part.

5. The toilet according to any one of claims 2 to 4,
wherein a length of the first opening in an up-down direction is less than or equal to 15 mm.

6. The toilet according to any one of claims 2 to 5, further comprising:
an opening/closing part that opens the first opening when the drawer part is inserted into the main body part, and blocks off the first opening after the drawer part has been pulled out from the main body part.

7. The toilet according to claim 6,
wherein the opening/closing part is constituted by a first plate-shaped member capable of pivoting with an upper side of the first opening serving as an axis.

8. The toilet according to any one of claims 2 to 7, further comprising:
a second plate-shaped member inserted between the absorbent sheet and the plurality of granules in a state where the absorbent sheet and the plurality of granules are present within the receptacle.

9. The toilet according to claim 8,
wherein a second opening is formed in the side surface part of the main body part; and
the second plate-shaped member can be pulled out from and inserted into the main body part through the second opening.

10. The toilet according to claim 8 or 9,
wherein holes are formed in the second plate-shaped member.

11. The toilet according to claim 10,
wherein the second plate-shaped member is a wire mesh.

12. The toilet according to any one of claims 8 to 11,
wherein a thickness of the second plate-shaped member is less than or equal to 5 mm.

13. The toilet according to any one of claims 1 to 12, further comprising:
a cover part that covers the receptacle from above.

14. The toilet according to any one of claims 1 to 13,
wherein the granules have antibacterial properties.

15. The toilet according to any one of claims 1 to 14,
wherein the granules have anti-odor or deodorizing properties.

16. The toilet according to any one of claims 1 to 15,
wherein the plurality of granules include a first granule having a first diameter and a second granule having a second diameter smaller than the first diameter.

17. The toilet according to claim 16,
wherein the first diameter is less than or equal to 30 mm.

18. The toilet according to claim 16 or 17,
wherein the second diameter is greater than or equal to 5 mm.

19. The toilet according to any one of claims 16 to 18,
wherein the plurality of granules include a third granule having a third diameter smaller than the first diameter and greater than the second diameter.

20. The toilet according to any one of claims 1 to 19,
wherein the granules are spherical in shape.

21. The toilet according to any one of claims 1 to 20,
wherein a recess is formed in the surface of each of the granules.

22. The toilet according to claim 21,
wherein a functional substance is held within the recess.
